Europäisches Patentamt

European Patent Office

Office européen des brevets

(11) Veröffentlichungsnummer: **0 038 416**
**A2**

(12) # EUROPÄISCHE PATENTANMELDUNG

(21) Anmeldenummer: **81101680.7**

(22) Anmeldetag: **07.03.81**

(51) Int. Cl.³: **A 01 N 25/02**

(30) Priorität: **11.03.80 CH 1882/80**

(43) Veröffentlichungstag der Anmeldung:
**28.10.81 Patentblatt 81/43**

(84) Benannte Vertragsstaaten:
**AT BE DE FR GB IT LU NL SE**

(71) Anmelder: **Intermedicat GmbH**
**Gerliswilstrasse 45**
**CH-6020 Emmenbrücke(CH)**

(72) Erfinder:
**Der Erfinder hat auf seine Nennung verzichtet**

(74) Vertreter: **von Kreisler, Alek, Dipl.-Chem. et al,**
**Deichmannhaus am Hauptbahnhof**
**D-5000 Köln 1(DE)**

(54) **Desinfektionsmittelformulierungen mit spezifischem Wirkungsmechanismus.**

(57) Die vorliegende Erfindung betrifft Desinfektionsmittelformulierungen mit spezifischem Wirkungsmechanismus. Es wurde gefunden, das Desinfektionsmittel, auch wasserunlösliche, durch Kombination mit polaren, apolaren und dipolaren Lösungsmittelsystemen in ihrer Aktivität gesteigert werden können. Die mikrobiziden Stoffe werden durch Einsatz von bipolaren Lösungsmittelsystemen in echte oder unechte Lösung in Gegenwart von Wasser gebracht, so dass sie ihre Aktivität voll entfalten können.

Auch wasserlösliche Substanzen können in ihrer Aktivität gesteigert werden, wenn sie in Kombination mit bipolaren Lösungsmittelsystemen zur Anwendung kommen.

Die Lösungsmittelsysteme sind so zu wählen, dass sie bipolar wirken, damit die mikrobiziden Substanzen in entgegengesetzten Lösungsmittelphasen löslich sind und dadurch auch in beiden Systemen wirken. Im weiteren ist der Wasserverdunstung durch das System entgegenzuwirken, da mikrobizide Substanzen nur in die Struktur oder den Stoffwechsel der Mikroorganismen eingreifen können, wenn ein genügender Wasserfilm vorhanden ist.

Als mikrobizide Substanzen kommen alle bekannten Mittel in Frage, die sich in Gegenwart von Wasser und bipolaren Lösungsmittelsystemen zu echten, unechten Lösungen oder Dispersionen verarbeiten lassen.

VON KREISLER  SCHÖNWALD  EISHOLD  FUES 0038416

VON KREISLER  KELLER  SELTING  WERNER

Intermedicat GmbH.

Gerliswilstrasse 43

CH 6020 Emmenbrücke

PATENTANWÄLTE

Dr.-Ing. von Kreisler † 1973

Dr.-Ing. K. Schönwald, Köln
Dr.-Ing. K. W. Eishold, Bad Soden
Dr. J. F. Fues, Köln
Dipl.-Chem. Alek von Kreisler, Köln
Dipl.-Chem. Carola Keller, Köln
Dipl.-Ing. G. Selting, Köln
Dr. H.-K. Werner, Köln

DEICHMANNHAUS AM HAUPTBAHNHOF
D-5000 KÖLN 1

6.März 1981 AvK/IM

Desinfektionsmittelformulierungen mit spezifischem
Wirkungsmechanismus

-----------------------------------------------------

Vorliegende Erfindung betrifft Desinfektionsmittelformulierungen mit spezifischem Wirkungsmechanismus.

Aus dem Stand der Technik ist bekannt, daß Desinfektionsmittel als wässrige Lösungen, Dispersionen, vermischt
mit Alkohol und Netzmitteln, zum Einsatz kommen.

Es wurde gefunden, dass Desinfektionsmittel, auch wasserunlösliche, durch Kombination mit polaren, apolaren und
dipolaren Lösungsmittelsystemen in ihrer Aktivität
gesteigert werden können. Die mikrobiziden Stoffe werden
durch Einsatz von bipolaren Lösungsmittelsystemen in
echte oder unechte Lösung in Gegenwart von Wasser
gebracht, so dass sie ihre Aktivität voll entfalten
können.

Auch wasserlösliche Substanzen können in ihrer Aktivität
gesteigert werden, wenn sie in Kombination mit bipolaren
Lösungsmittelsystemen zur Anwendung kommen.

Es wurde überraschend gefunden, dass mikrobizide Substanzen ein breiteres Wirkungsspektrum bei niedrigerer Wirkstoffkonzentration aufweisen, wenn sie mit Lösungsmittelsystemen zum Einsatz kommen, die einem bipolaren System angehören.

Die Lösungsmittelsysteme sind so zu wählen, dass sie bipolar wirken, damit die mikrobiziden Substanzen in entgegengesetzten Lösungsmittelphasen löslich sind und dadurch auch in beiden Systemen wirken.

Mikrobizide Substanzen können ihre Aktivität nur entfalten, wenn sie in einem Zustand vorliegen, der es gestattet, dass die zu bekämpfenden Mikroorganismen durch Eingriffe in ihre Struktur oder den Stoffwechsel in einem Masse geschädigt werden, das zu ihrem Absterben führt. Dies ist aber nur in Gegenwart eines Wasserfilms möglich. Der Wasserfilm wird durch das bipolyre Lösungsmittelsystem gemäss der Erfindung aufrecht erhalten.

Bei einer bevorzugten Ausführungsform werden bipolare Lösungsmittelsysteme eingesetzt, die einen niedrigen Dampfdruck aufweisen und deshalb langsamer verdunsten. Diese Tatsache trägt dazu bei, daß der für die Wirkung des mikrobiziden Systems nötige Wasserfilm länger erhalten bleibt.

Weiter ist das bipolare Lösungsmittelsystem dafür verantwortlich, dass auch schlecht wasserlösliche Substanzen
in wirksamer Konzentration in den Wasserfilm aufgenommen
werden und so zum intensiven Kontakt mit den Mikroorganismen gezwungen werden. Durch diese Tatsache ist die Wirkung
auf die Mikroorganismen schneller und länger gewährleistet,
was durch die niedrigere Wirkstoffkonzentration und die
kürzere Einwirkungszeit im Vergleich zu Formulierungen
ohne bipolares Lösungsmittelsystem bewiesen wird.
Unter bipolarem Lösungsmittel verstehen wir Lösungsvermittler, die sowohl im Wasserfilm als auch in Lipoiden
und Fetten eine ausgeprägte Lösungseigenschaft aufweisen
und als Phasenvermittler zwischen Mikrobizid und Mikroorganismen dienen.
Bipolare Lösungsmittelsysteme sind Stoffe beziehungsweise Stoffgemische, die eine Löslichkeit im polaren
und apolaren Gebiet aufweisen. Im weiteren ist Voraussetzung, dass die mikrobiziden Substanzen, die für
die Formulierung verwendet werden, in beiden Phasen
genügende Löslichkeit aufweisen, um die Aktivitätsschwelle bei ihrer Anwendung zu erreichen.

Lösungsmittel, die für den Aufbau bipolarer Systeme
verwendet werden können, gehören folgenden chemischen
Gruppen an:


Aldehyde

z.B. Acetaldehyd, Heptaldehyd, Furfural, Benzaldehyd.


Ketone

Verzweigte und unverzweigte, gesättigte und ungesättigte,
substituierte und unsubstituierte, cyclische und
acyclische Ketone der Kettenlängen $C_3 - C_{15}$,
z.B. Methyläthylketon, Äthylbenzylketon, Butylisopropylketon, Acetylaceton, Acetonylalkohol.


Alkohole

Verzweigte und unverzweigte, gesättigte und ungesättigte,
substituierte und unsubstituierte, cyclische und
acyclische, ein- und mehrwertige Alkohole der Kettenlängen $C_1 - C_{15}$, sowie aromatische Alkohole,
z.B. Benzylalkohol, und heterocyclische Alkohole,
z.B. Furfurylalkhol.

## Äther

Verzweigte und unverzweigte, gesättigte und ungesättigte, substituierte und unsubstituierte, cyclische und acyclische Äther der Kettenlängen $C_2 - C_{10}$, z.B. Diäthyläther, sowie Polyäther, z.B. Polyglykoläther.

## Carbonsäuren

Verzweigte und unverzweigte, gesättigte und ungesättigte, substituierte und unsubstituierte, ein- und mehrbasische Carbonsäuren der Kettenlängen $C_1 - C_{20}$, z.B. Heptylsäure, Undecylensäure.

## Ester

Verzweigte und unverzweigte, gesättigte und ungesättigte, aus ein- und mehrwertigen Alkoholen und ein- und mehrbasischen Säuren, z.B. Amylacetat, Hexylacetat, Glycerinmono-, -di- und -triacetat, Zuckerester, Bernsteinsäurester.

## Polyglykole

z.B. Propylenglykol, Äthylenglykol, Polyglykole mit Molekulargewichten von 2oo bis 2o.ooo.

## Nitrile

z.B. Hexylnitril, Undecylennitril, substituierte Benzylnitrile.

## Kohlenwasserstoffe

Aliphatische, cyclische, heterocyclische, substituierte
und unsubstituierte, gesättigte und ungesättigte
Kohlenwasserstoffe, z.B. Cyclohexanol, Methylcyclohexanol, Trichloräthylen.


## Thioverbindungen

Sulfone, Sulfosäuren, Sulfoxide, z.B. Dimethylsulfoxid.


## Stickstoffverbindungen

Aliphatische, cyclische, heterocyclische, substituierte
und unsubstituierte, gesättigte und ungesättigte,
primäre, sekundäre, tertiäre. Mono-, Di- und Polyamine,
Nitroverbindungen, Amide, nieder- und höhermolekulare
Verbindungen, z.B. Pyrrolidone, Polyvinylpyrrolidone.


Voraussetzung für den Einsatz dieser Lösungsmittel oder
Systemen von Lösungsmitteln ist wiederum die polare und
apolare Löslichkeit zur Unterstützung der Aktivität
mikrobizider Verbindungen.

Mikrobizide Substanzen, die durch diese Lösungsmittel beziehungsweise durch Kombinationen begünstigt werden, gehören folgenden Stoffgruppen an:

## Aldehyde

z.B. Glutardialdehyd, Glyoxal, Formaldehyd.

## Aldehydabspaltende Verbindungen

z.B. 2-Brom-2-nitropropan-1,3-diol, 5-Brom-5-nitro-1,3-dioxan.

## Alkohole

Verzweigte und unverzweigte, gesättigte und ungesättigte Alkohole der Kettenlängen $C_1 - C_{11}$, z.B. i-Propanol, n-Propanol, Äthanol, Undecylalkohol, Undecylenalkohol, sowie aromatische Alkohole, z.B. Benzylalkohol, Furfurylalkohol.

## Amine

Aliphatische, cyclische, heterocyclische, substituierte und unsubstituierte, gesättigte und ungesättigte, primäre, sekundäre, tertiäre, Mono-, Di- und Polyamine, z.B. n-Dodecylamin, n-Dodecylaminopropylamin, Lauryloxypropylamin, N'-Lauryldiäthylentriamin, N-alkyliertes Isophorondiamin.

Quaternäre Verbindungen

Quaternäre Ammoniumverbindungen,

z.B. Dodecyldimethylbenzylammoniumchlorid,

Dichlorbenzyldimethyldodecylammoniumchlorid,

Cetylpyridiniumchlorid, Sojatrimethylammoniumchlorid,

Didecyldimethylammoniumchlorid, quaternäre Phosphoniumverbindungen, z.B. Lauryltriphenylphosphoniumbromid.


Amphotenside

z.B. Dodecyl-di (aminoäthyl) -glycin.


Guanidine und Diguanidine

z.B. Dodecylguanidinacetat, Chlorhexidindiacetat.


Halogene und Halogenabspalter, z.B. $Cl_2$, $J_2$

Alkali- und Erdalkalihypochlorite, Natriumchlorit,

Benzolsulfochloramin-Natrium, p-Toluolsulfonchloramid-

Natrium, p-Toluolsulfodichloramid, Dichlorisocyanursäure, Trichlorisocyanursäure, Trichlormelamin,

1,3-Dichlor-5,5-dimethylhydantoin, Dichlorglycoluril.


Phenole

ein- und mehrkernige Phenole, substituierte und unsubstituierte Phenole, z.B. Phenol, p-Chlor-o-Kresol, Resorcin, 3,5-Dimethylphenol, Pentachlorphenolnatrium, o-Benzylphenol, o-Phenylphenol.

Beispiel 1:

5 Teile Chlorthymol werden in 1o Teilen Diacetonalkohol und 1o Teilen Glycerin gelöst und auf 1oo Teile mit Isopropylalkohol/Wasser 1:1 eingestellt.

Beispiel 2:

5 Teile 2,4,4'Trichlor-2-hydroxy-diphenyläther werden in 1o Teilen N-Methyl-2-pyrrolidon und 2,5 Teilen para-Chlor-meta-Kresol gelöst.

Zu dieser Lösung gibt man 5 Teile Cetylpyridiniumchlorid, gelöst in Isopropylalkohol/Wasser 1:1, so dass 1oo Gewichts- teile Produkt erhalten werden.

Beispiel 3:

5 Teile 2,2'-methylenbis,3,4,6-Trichlorphenol werden in 1o Teilen Furfurylalkohol und in 1o Teilen Äthylglykolester gelöst und mit 1o Teilen Dimethyldiisooctylammoniumchlorid, welches in 65 Teilen Isopropylalkohol/Wasser (1:1) gelöst ist, gemischt, so dass 1oo Gewichtsteile Produkt entstehen.

Beispiel 4:

In 1o Teilen Bencylalkohol werden 1o Teile 1-Dodecyl- 1,4,7-triazaoctan-8-carbonsäure gelöst.

Man stellt auf 1oo Gewichtsteile mit einem Gemisch aus 1o Teilen N-Methyl-2-pyrrolidon, 1o Teilen Isopropylalkohol und 6o Teilen Wasser.

Beispiel 5:

1o Teile Cetyl-dimethyl-bencylammoniumchlorid werden in

1o Teilen Äthylalkohol, 1o Teilen Diacetonalkohol und

15 Teilen Sorbit (7o%) gemischt.

Die Lösung wird mit demineralisiertem Wasser auf 1oo Gewichtsteile fertiggestellt.


Beispiel 6:

Für die folgenden Formulierungen wurde als Lösungsmittelsystem gewählt, welches für verschiedene Wirkstoffe eingesetzt werden kann.


Lösungsmittelzusammensetzung:

1o Teile Propylenglykol

1o Teile Glycerin

1o Teile N-Methyl-2-pyrrolidon

6o Teile demineralisiertes Wasser


Als mikrobizide Substanzen wurden gewählt:

| Formulierung a) | 1o Teile p-Chlor-m-Kresol |
| Formulierung b) | 1o Teile Chlorthymol |
| Formulierung c) | 1o Teile 1-Dodecyl-1,4,7-triazaoctan-8-carbonsäure. HCl |
| Formulierung d) | 1o Teile 1,3-Didecyl-2-methylimidazilium-chlorid |
| Formulierung e) | 1o Teile Alkyl-dimethyl-bencylammoniumchlorid |

Prüfung der Beispiele a) - e) im Suspensionstest:

Legende:   O = kein Wachstum

+ = normales Wachstum

± = Hemmung

| Mikrobizide Substanzen | Verdünnungs- reihe | Einwirkungs- zeit | | | | | |
|---|---|---|---|---|---|---|---|
| | | 1' | 1o' | 3o' | 1' | 1o' | 3o' |
| | | E.Coli ATCC 11229 | | | Staph.aureus ATCC 6538 | | |
| 1,3-Didecyl-2-methyl- imidaziliumchlorid | 1:1oo | + | O | O | + | O | O |
| | 1:2oo | + | + | O | + | ± | O |
| | 1:5oo | + | + | + | + | + | + |
| 1,3-Didecyl-2-methyl- imidaziliumchlorid mit Lösungsmittel- system | 1:1oo | O | O | O | O | O | O |
| | 1:2oo | O | O | O | O | O | O |
| | 1:5oo | + | O | O | + | ± | O |
| | 1:1ooo | + | + | O | + | + | + |
| Alkyl-dimethyl-benzyl- ammoniumchlorid | 1:1oo | O | O | O | O | O | O |
| | 1:2oo | + | + | + | O | O | O |
| | 1:5oo | + | + | + | + | + | O |
| Alkyl-dimethyl-benzyl- ammoniumchlorid mit Lösungsmittel- system | 1:1oo | O | O | O | O | O | O |
| | 1:2oo | O | O | O | O | O | O |
| | 1:5oo | ± | O | O | O | O | O |
| | 1:1ooo | + | ± | O | O | O | O |

| Lösungsmittel-gemisch | 1: 5o | + | + | + | + | + | ± |
| | 1:1oo | + | + | + | + | + | + |
| | 1:2oo | + | + | + | + | + | + |
| Wasser | rein | + | + | + | + | + | + |

| Mikrobizide Substanzen | Verdünnungs- reihe | Einwirkungs- zeit | | | | | |
| --- | --- | --- | --- | --- | --- | --- | --- |
| | | 1' | 1o' | 3o' | 1' | 1o' | 3o' |
| | | E.Coli ATCC 11229 | | | Staph.aureus ATCC 6538 | | |
| p-Chlor-m-Kresol | 1:1ooo | O | O | O | + | + | O |
| | 1:2ooo | + | + | O | + | + | + |
| | 1:5ooo | + | + | + | + | + | + |
| p-Chlor-m-Kresol mit Lösungsmittel- system | 1:1ooo | O | O | O | O | O | O |
| | 1:2ooo | O | O | O | O | O | O |
| | 1:5ooo | + | ± | O | + | ± | O |
| Chlor-Thymol | 1:5ooo | O | O | O | O | O | O |
| | 1:1oooo | + | + | + | + | + | + |
| | 1:2oooo | + | + | + | + | + | + |
| Chlor-Thymol mit Lösungsmittel- system | 1:5ooo | O | O | O | O | O | O |
| | 1:1oooo | O | O | O | O | O | O |
| | 1:2oooo | + | + | ± | + | ± | O |

| Mikrobizide Substanzen | Verdünnungsreihe | Einwirkungszeit | | | | | |
|---|---|---|---|---|---|---|---|
| | | 1' | 1o' | 3o' | 1' | 1o' | 3o' |
| 1-Dodecyl-1,4,7-triaza-octan-8-carbonsäure HCl | 1:2ooo | O | O | O | O | O | O |
| | 1:5ooo | + | + | + | + | ± | O |
| | 1:1oooo | + | + | + | + | + | + |
| 1-Dodecyl-1,4,7-triaza-octan-8-carbonsäure HCl mit Lösungsmittel-system | 1:2ooo | O | O | O | O | O | O |
| | 1:5ooo | O | O | O | O | O | O |
| | 1:1oooo | + | ± | O | + | ± | O |

Patentansprüche
------------------------------------

1.      Desinfektionsmittel, dadurch gekennzeichnet, daß es
eine Kombination von mikrobioziden Substanzen und bipolaren
Lösungsmittelsystemen enthält.

2.      Desinfektionsmittel nach Anspruch 1, dadurch gekennzeichnet, daß die biplaren Lösungsmittelsysteme eine niederen
Dampfdruck und eine geringe Verdunstung aufweisen.

3.      Desinfektionsmittel, dadurch gekennzeichnet, daß die
bipolaren Lösungsmittelsysteme ein Wasserrückhaltevermögen
aufweisen, um ein schnelles Abtrocknen der Behandlungsflächen
zu verzögern.

4.      Desinfektionsmittel nach Ansprüchen 1 - 3, dadurch
gekennzeichnet, daß sie Mischungen von mikrobioziden Substanzen enthalten.

5.      Desinfektionsmittel nach Ansprüchen 1 - 4, dadurch gekennzeichnet, daß sie Mischungen von bipolaren Lösungsmittelsystemen enthalten.

6.      Desinfektionsmittel nach Ansprüchen 1 - 5, dadurch gekennzeichnet, daß sie Wasser enthalten.

7.      Verfahren zur Herstellung von Desinfektionsmitteln
nach Ansprüchen 1 - 6, dadurch gekennzeichnet, daß man mikrobiozide Substanzen mit bipolaren Lösungsmittelsysteme und gegebenenfalls Wasser mischt.